# EUROPÄISCHE PATENTSCHRIFT

(11) **EP 1 449 040 B1**
(45) Veröffentlichungstag und Bekanntmachung des Hinweises auf die Patenterteilung: **30.04.2008**
(21) Anmeldenummer: 02776876.1
(22) Anmeldetag: 06.11.2002
(51) Int. Cl.: G05B 19/05

(54) **VERFAHREN ZUM ZUGRIFF AUF DATEN EINES AUTOMATISIERUNGSGERÄTES UND AUTOMATISIERUNGSGERÄT**
METHOD FOR ACCESSING DATA OF AN AUTOMATION APPARATUS AND CORRESPONDING AUTOMATION APPARATUS
PROCEDE PERMETTANT D'ACCEDER AUX DONNEES D'UN APPAREIL D'AUTOMATISATION, ET APPAREIL D'AUTOMATISATION

(30) Priorität: 22.11.2001 DE 10157251
(43) Veröffentlichungstag der Anmeldung: 25.08.2004
(73) Patentinhaber: SIEMENS AKTIENGESELLSCHAFT, 80333 München (DE)
(72) Erfinder: STEINDL, Günter, 92284 Trasslberg (DE)
(86) Internationale Anmeldenummer: PCT/DE2002/004116
(87) Internationale Veröffentlichungsnummer: WO 2003/046758

(56) Entgegenhaltungen:
- EP-A- 0 540 903
- EP-A- 0 778 522
- WO-A-01/37057
- WO-A-91/14988
- US-B1- 6 311 101

## Beschreibung

Die Erfindung bezieht sich auf ein Verfahren zum Zugriff auf Daten eines Automatisierungsgerätes. Sie bezieht sich weiter auf ein zur Durchführung des Verfahrens geeignet ausgestaltetes Automatisierungsgerät.

Automatisierungsgeräte werden zur Steuerung und/oder Überwachung technischer Prozesse eingesetzt. Spezielle Automatisierungsgeräte sind als so genannte speicherprogrammierbare Steuerungen bekannt. Andere spezielle Automatisierungsgeräte werden durch einen so genannten Prozessrechner gebildet. Automatisierungsgeräte unterscheiden sich letztlich von so genannten Standardcomputern, wie sie heute für Büroanwendungen eingesetzt werden, nur durch erweiterte Anschlussmöglichkeiten, eine reduzierte, spezifische Funktionalität sowie die Eignung zum Einsatz in Industrieumgebungen. Die erweiterten Anschlussmöglichkeiten resultieren aus der Notwendigkeit, die Prozessperipherie mit dem Automatisierungsgerät verbinden zum müssen, um Daten aus dem gesteuerten und/oder überwachten Prozess aufzunehmen und um Steuerinformationen an den Prozess auszugeben. Zum Einsatz in üblichen Industrieumgebungen ist ein spezielles Gehäuse oder eine geeignete Abschirmung zum Schutz gegen Beschädigungen durch mechanische oder chemische Einflüsse oder gegen elektromagnetische Störeinflüsse vorgesehen. Die Funktionalität ist im Wesentlichen auf Steuerungs- und Überwachungsfunktionen sowie die dazu erforderlichen Verarbeitungsfunktionen reduziert.

Diese bekannten Automatisierungsgeräte weisen einen Speicher mit einem darin gespeicherten Objektmodell sowie eine Funktionsschnittstelle auf, die gleichfalls in Speicher abgelegt ist und einen Zugriff auf das Objektmodell ermöglicht. Exemplarisch seien die Automatisierungsgeräte der SIEMENS AG mit der Bezeichnung SIMATIC S7-300 oder SIMATIC S7-400 genannt.

Das Objektmodell des Automatisierungsgerätes beschreibt einerseits die Organisation der im Automatisierungsgerät gespeicherten Daten und umfasst andererseits aber auch die gespeicherten Daten selbst, nämlich z. B. so genannte Organisationsbausteine, kurz OB, so genannte Datenbausteine, kurz DB, so genannte Funktionsbausteine, kurz FB, so genannte Function Calls, kurz FC, und so genannte System Function Calls, kurz SFC, um nur einige zu nennen. Auf diese kann mittels der Funktionsschnittstelle mit für das Automatisierungsgerät definierten Funktionen zugegriffen werden. Die Gesamtheit der Operations- und Funktionsbausteine bildet das eigentliche Steuerprogramm. Daneben umfasst das Objektmodell so genannte Datenbausteine, in denen Daten zur internen Verknüpfung oder zur Speicherung von Zwischenergebnissen abgelegt werden. Ferner umfasst das Objektmodell noch einen Eingangs- und einen Ausgangsspeicherbereich, in dem die vom Prozess aufgenommenen Daten bzw. die an den Prozess auszugebenden Daten hinterlegt sind.

Aus der EP-A-0 540 903 ist ein Automatisierungsgerät mit einer Netzwerkschnittstelle bekannt. Über diese Schnittstelle kann unter anderem auch das Anwenderprogramm in den Steuerungsbaustein geladen werden.

Aus der WO-A-91 14988 ist ein Automatisierungsgerät mit einer busfähigen Schnittstelle bekannt. Diese Schnittstelle wird aber nicht als Programmierschnittstelle verwendet.

Ein Automatisierungsgerät mit einer Internetschnittstelle ist aus der WO-A 01 37057 bekannt. Jedoch wird auch diese Schnittstelle nicht als Programmierschnittstelle verwendet.

Nachteilig bei jedem bisher bekannten Automatisierungsgerät ist, dass ein Austausch von Daten zwischen einem Automatisierungsgerät und einem "Standardcomputer" wegen der eingeschränkten Funktionalität des Automatisierungsgerätes nur bedingt möglich ist, da neben so genannten Ein- und Ausgängen zum Anschluss der Prozessperipherie nur eine Schnittstelle zum Anschluss eines ebenfalls proprietären Programmiergerätes mit einem dafür definierten Kommunikationsprotokoll vorgesehen ist.

Aus der US 6 311 101 B1 ist ein Automatisierungsgerät bekannt, mit dem Daten auch mittels eines Standardcomputers abgerufen oder verändert werden können. Allerdings ist kein Anschluss eines proprietären Programmiergerätes mit einem dafür definierten Kommunikationsprotokoll vorgesehen.

Die Aufgabe der vorliegenden Erfindung besteht darin, ein Verfahren anzugeben, mit dem die Daten eines Automatisierungsgerätes mittels eines Standardcomputers und eines Programmierungsgeräts abgerufen oder verändert werden können.

Diese Aufgabe wird erfindungsgemäß mit einem Verfahren zum Zugriff auf Daten eines Automatisierungsgerätes gemäß Anspruch 1 gelöst. Das Automatisierungsgerät weist dabei in an sich bekannter Weise einen Speicher und eine Funktionsschnittstelle auf. Die Funktionsschnittstelle ist selbst im Speicher des Automatisierungsgerätes abgelegt und ermöglicht einen Zugriff auf das im Speicher des Automatisierungsgerätes abgelegte Objektmodell. Das Objektmodell umfasst zumindest das Steuerprogramm, das auf dem Automatisierungsgerät oder durch das Automatisierungsgerät zur Ausführung gelangt sowie die zur Ausführung notwendigen Daten, wie z. B. Daten, die aus einem durch das Steuerprogramm gesteuerten technischen Prozess aufgenommen werden, und Daten, die zur Steuerung des technischen Prozesses dienen.

Gemäß der Erfindung ist vorgesehen, das Objektmodell des Automatisierungsgerätes, mit dem schreibend auf das Objektmodell zugegriffen wird, über eine kommunikative Verbindung, bei der ein Standardprotokoll verwendet werden kann, zugänglich zu machen. Dazu wird ein auf das Objektmodell bezogener Kommunikationsauftrag von einem Client oder einem Server an einen Umsetzer weitergeleitet, der den Kommunikationsauftrag in ein durch die Funktionsschnittstelle verarbeitbares Format umsetzt. Außerdem wird ein auf das Objektmodell bezogener Kommunikationsauftrag vom externen Programmiergerät über die Programmiergeräteschnittstelle unter Umgehung des Umsetzers an die Funktionsschnittstelle geleitet.

Als Verbindung mit einem Standardprotokoll seien hier eine so genannte FTP- (FTP = File Transfer Protocol) oder NFS-Verbindung (NFS = Network-File-System) genannt. Das File Transfer Protocol beruht auf einer so genannten Client-Server Architektur. Entsprechend findet bei Verwendung dieses Protokolls ein Datenaustausch zwischen einem so genannten FTP-Server und einem so genannten FTP-Client statt. Die Daten werden auf einem FTP-Server gehalten; die Datenübertragung geschieht mit einem oder mehreren auf den Server zugreifenden FTP-Clients. FTP ermöglicht sowohl eine Datenübertragung vom Client zum Server als auch vom Server zum Client. Ein Standard FTP- Server bietet damit die Mindestfunktionen, den Inhalt seines Datenbestandes einem FTP-Client anzeigen zu können (directory); Daten an einen FTP-Client übertragen zu können (get/read) oder Daten von einem FTP-Client empfangen zu können (put/write). Ein Standard FTP-Client bietet entsprechend die Mindestfunktionen, eine Anzeige des Inhalts des Datenbestandes eines FTP-Servers abrufen zu können (directory), Daten von einem FTP-Server empfangen zu können (get/read) oder Daten an einen FTP-Server zu übertragen (put/write).

Um die Daten auch außerhalb des jeweiligen Automatisierungsgerätes oder Geräten, die ohnehin zum Austausch von Daten mit dem jeweiligen Automatisierungsgerät vorgesehen sind, zur Verfügung zu stellen, wird ein Client oder ein Server zur Abwicklung des gewählten Standardprotokolls zusammen mit dem Umsetzer verwendet, der Zugriffe z. B. über einen FTP-Server in Zugriffe auf das Automatisierungsgerät konvertiert.

Wenn durch ein Gerät, das ohnehin zum Austausch von Daten mit dem jeweiligen Automatisierungsgerät vorgesehen ist, z. B. ein so genanntes Programmiergerät, ein Datenbaustein, z. B. der Datenbaustein mit der Nummer 1, im folgenden kurz DB1, aus dem Automatisierungsgerät gelesen werden soll, wird dazu die Funktion ausgewählt, die den Datenbaustein an das Programmiergerät transferiert. Dazu umfasst das Automatisierungsgerät in seiner Funktionsschnittstelle eine entsprechende Kollektion von Funktionen, die unterschiedliche Zugriffe, z.B. "Lesen", "Schreiben", etc., des Programmiergerätes auf das Objektmodell des Automatisierungsgerätes ermöglichen.

Wenn durch ein Endgerät, das nicht speziell zum Austausch von Daten mit dem jeweiligen Automatisierungsgerät vorgesehen ist, z.B. einen so genannten Personalcomputer, derselbe Datenbaustein aus dem Automatisierungsgerät gelesen werden soll, muss dies mit den Funktionen des Standardprotokolls erfolgen. Zur Abwicklung des Standardprotokolls auf Seiten des Personalcomputers sind diverse Applikationen zum Einsatz mit dem jeweiligen Endgerät verfügbar. Das Automatisierungsgerät ist allerdings nicht unmittelbar in der Lage, das jeweils gewählte Standardprotokoll zu interpretieren. Daher dient der Umsetzer als Mittler zwischen Client oder Server und der Funktionsschnittstelle. Kommunikationsaufträge gemäß dem Standardprotokoll werden vom Umsetzer in eine durch die Funktionsschnittstelle verarbeitbare Form transformiert. Wenn Daten in das Objektmodell des Automatisierungsgerätes geschrieben werden sollen, geschieht dies zunächst mit einer Schreibfunktion (put/write) gemäß dem Standardprotokoll, die durch den Umsetzer in eine Schreibfunktion, die durch die Funktionsschnittstelle abgewickelt werden kann, konvertiert wird. Wenn Daten aus dem Objektmodell des Automatisierungsgerätes gelesen werden sollen, geschieht dies entsprechend mit einer Lesefunktion (get/read) gemäß dem Standardprotokoll, die durch den Umsetzer in eine entsprechende Lesefunktion, die durch die Funktionsschnittstelle abgewickelt werden kann, konvertiert wird.

Zweckmäßige Weiterbildungen des Verfahrens gemäß Anspruch 1 sind Gegenstand der auf diesen Anspruch rückbezogenen Unteransprüche.

Gemäß einer Ausgestaltung des erfindungsgemäßen Verfahrens setzt der Umsetzer auch einen Kommunikationsauftrag von der Funktionsschnittstelle in ein durch den Client oder den Server verarbeitbares Format um und leitet den umgesetzten Kommunikationsauftrag an den Client oder den Server weiter. Der Vorteil einer derartigen Ausgestaltung besteht darin, dass das Automatisierungsgerät auch als aktiver Kommunikationspartner in einer Kommunikationsbeziehung fungieren und z.B. bei Erreichen eines bestimmten Zustands im gesteuerten Prozess entsprechende Daten übermitteln kann.

Weiter vorteilhaft ist der Client oder Server Bestandteil des Automatisierungsgerätes und mit einer Standardschnittstelle des Automatisierungsgerätes kommunikativ verbunden. Der Client oder Server verarbeitet die über die Standardschnittstelle eingehenden oder abgehenden Kommunikationsaufträge gemäß einem Standardprotokoll. Der Vorteil einer derartigen Ausgestaltung besteht darin, dass über die Standardschnittstelle Endgeräte unterschiedlichster Hersteller und Leistungsklassen mit dem Automatisierungsgerät verbunden werden können und dabei Daten zwischen dem Automatisierungsgerät und jedem anschließbaren Endgerät transferiert werden können.

Wenn durch den Umsetzer dem Client oder Server das Objektmodell und dessen Struktur in einer hierarchischen Form präsentiert wird, wird ein besonders übersichtlicher und benutzerfreundlicher Zugriff au das Objektmodell des Automatisierungsgerätes möglich.

Gemäß einer weiteren Ausgestaltung der Erfindung wird zum Zugriff auf die Daten des Automatisierungsgerätes zunächst eine Struktur des Objektmodells abgerufen. Die Struktur des Objektmodells ist ein Abbild des Objektmodells selbst. Es umfasst ein Abbild der einzelnen Komponenten des Objektmodells, z.B. die Organisations-, Daten, Funktionsbausteine, etc. Sobald das Abbild des Objektmodells zur Verfügung steht, ist eine Selektion der darin enthaltenen Komponenten möglich. Entsprechend werden anhand des Abbilds der Struktur des Objektmodells einzelne oder mehrere Komponenten selektiert. Auf diese wird dann zugegriffen, indem Daten, die im Speicher des Automatisierungsgerätes der selektierten Komponente entsprechen, über die Funktionsschnittstelle geschrieben oder gelesen werden. Damit ist auf das Objektmodell ein Zugriff möglich, wie dies mit heute bekannten so genannten Dateimanagern populärer Betriebssysteme auf die Daten z.B. einer Festplatte möglich ist. Der Benutzer weiß damit anhand einer entsprechenden Übung mit derartigen Dateimanagern unmittelbar, welche Maßnahmen er ergreifen muss, um z.B. Daten aus dem Objektmodell des Automatisierungsgerätes abzurufen.

Weiter vorteilhaft sind gleichartige Komponenten des Objektmodells gruppenweise zusammengefasst und gruppenweise transferierbar. Dies erleichtert den Zugriff auf das Objektmodell nochmals erheblich, indem z.B. zum Transfer sämtlicher Datenbausteine nicht jeder Datenbaustein einzeln, sondern direkt die komplette Gruppe sämtlicher Datenbausteine selektiert werden kann. Die gruppenweise Zusammenfassung setzt sich entlang der Hierarchie innerhalb der Struktur des Objektmodells fort, so dass es auch eine Gruppe gibt, die sämtliche Gruppen mit jeweils einem spezifischen Typ von Baustein enthält. Die Gruppierung auf der obersten Hierarchieebene entspricht letztlich dem Objektmodell selbst, so dass mit nur einer Selektion der komplette Datenbestand des Automatisierungsgerätes zum Transfer ausgewählt werden kann.

Vorteilhaft ist die Struktur des Objektmodells als so genannter Baum mit einer so genannten Wurzel, mit mindestens einem so genannten Ast und mindestens einem so genannten Blatt dargestellt. Die Wurzel entspricht der oben beschriebenen Gruppierung auf der obersten Hierarchiestufe. Jedes Blatt entspricht einer Komponente des Objektmodells, z.B. einen Daten- oder Funktionsbaustein, und jeder Ast einer gruppenweisen Zusammenfassung gleichartiger Komponenten oder anderer Äste.

Das Objektmodell ist selbst in einer gewissen zumindest impliziten Struktur organisiert, nämlich in der Form, dass es eine Menge von Organisationsbausteinen, eine Menge von Datenbausteinen, eine Menge von Funktionsbausteinen, etc. umfasst. Jede Art von Baustein wird organisatorisch in einem einzelnen Ast, im folgenden auch als "Verzeichnis" bezeichnet, zusammengefasst, wobei das Verzeichnis selbst den Namen der Klasse der enthaltenen Daten oder der Organisationsform trägt, z.B. "Funktionsbausteine". Wenn in das Verzeichnis "Funktionsbausteine" gewechselt wird, liefert ein geeigneter Kommunikationsauftrag gemäß dem Standardprotokoll dem Benutzer auf Seiten des Endgerätes eine Liste der auf dem Automatisierungsgerät vorhandenen Funktionsbausteine. Der Benutzer bekommt dann die Liste der Funktionsbausteine präsentiert, z.B. "FB1, FB2, ... FB7" und kann aus dieser Liste z.B. den Funktionsbaustein mit der Nummer 7 (FB7) zum Transfer auswählen. Dieser Lesevorgang wird vom Client initiiert. Der Benutzer des Endgerätes, auf dem ein entsprechender Client vorhanden ist, erhält also durch die Kommunikation des Clients mit dem dem Automatisierungsgerät vorgeschalteten Server die Daten des angeforderten Funktionsbausteins auf seinem Endgerät, z.B. seinem Personalcomputer, als Datei übertragen.

Die oben beschriebene Struktur kann auch noch tiefer geschachtelt werden, indem nämlich neben den eigentlichen Daten auch noch eine Beschreibung der Daten, gegebenenfalls auch eine Beschreibung des Programmcodes oder zumindest eine durch den Menschen leichter lesbare Darstellung des Programmcodes vorgehalten oder erzeugt wird. Dazu ist vorgesehen, dass das Abbild der Struktur des Objektmodells weitere Verzeichnisse umfasst, die jeweils als Unterverzeichnisse selbst die komplette Datenstruktur des Automatisierungsgerätes abbilden, jedoch je nach Weg im Verzeichnis unterschiedliche Daten zurückgeliefert werden. Ein Beispiel ist ein Verzeichnis mit dem Namen "Binär" und ein Verzeichnis mit dem Namen "Beschreibung", wobei jedes dieser Verzeichnisse Unterverzeichnisse für die Organisationsbausteine, die Datenbausteine, die Funktionsbausteine, etc. enthält. Um Daten aus dem Objektmodell abzurufen, wechselt ein Benutzer z.B. zunächst ins Verzeichnis "binär" und von dort ins Verzeichnis "Organisationsbausteine". Wenn dort der Organisationsbaustein mit der Nummer 7 ausgewählt wird, wird der entsprechende Organisationsbaustein in einem Binärformat zurückgeliefert. Wenn dagegen ausgehend vom Verzeichnis "Beschreibung" ins Verzeichnis "Organisationsbausteine" gewechselt wird und dort erneut der Organisationsbaustein mit der Nummer 7 selektiert wird, wird der entsprechende Organisationsbaustein in einem speziellen textuellen Format zurückgeliefert, welches die Lesbarkeit der in dem Organisationsbaustein enthaltenen Daten erleichtert. Dazu muss, wenn das Abholen des Datenbausteins aus dem Automatisierungsgerät angestoßen wird, nicht nur ein Transfer der Daten, sondern auch noch eine Interpretation der vom Automatisierungsgerät gelieferten Daten erfolgen. Für einen Organisationsbaustein ist diese Transferfunktionalität z.B. durch einen so genannten Disassembler zu gewährleisten. Alternativ oder zusätzlich kann vorgesehen sein, einen Organisationsbaustein im Speicher des Automatisierungsgerätes sowohl im Binärformat als auch in dem Format, wie er einem Benutzer gegebenenfalls präsentiert werden kann, vorzuhalten. Dies ist letztlich eine Frage des auf dem Automatisierungsgerät zur Verfügung stehenden Speicherplatzes. Ähnlich verhält es sich mit Klartextbezeichnungen zu im Steuerprogramm verwendeten so genannten Variablen, z.B. "DB1.7 = Motor im Schleichgang". Diese Information "Motor im Schleichgang" ist üblicherweise nicht im Datenbaustein enthalten, sondern in einer separaten Datei, der so genannten Signalliste. Hier ist vorgesehen, dass, wenn über den Weg "Beschreibung", "Datenbaustein" ein bestimmter Datenbaustein abgerufen wird und zum Transfer vorbereitet wird, vor dem Transfer nicht nur der Datenbaustein selbst zum Transfer aufbereitet wird, sondern auch noch die in der Signalliste enthaltenen Einträge, die sich auf Daten dieses Datenbausteins beziehen, in geeignetem Format zu den Transferdaten zugespielt werden, so dass der Benutzer nicht nur den Datenbaustein mit seinem Layout, sondern auch die Klartextbezeichnung der einzelnen Variablen innerhalb des Datenbausteins lesen kann.

Alternativ zu einer vergleichsweise tief geschachtelten Verzeichnisstruktur kann vorgesehen sein, als Unterverzeichnisse vom so genannten Wurzelverzeichnis nur Verzeichnisse für Organisationsbausteine, Datenbausteine, Funktionsbausteine, etc. vorzusehen und als "Dateien" in diesen Unterverzeichnissen die einzelnen Organisationsbausteine oder Datenbausteine je nach ihrem Inhalt durch unterschiedliche Erweiterungen, so genannte Extensions, zu kennzeichnen, z.B. eine Extension "binär" lediglich für den Binärinhalt und eine Extension "Beschreibung" für den erweiterten Inhalt mit Klartextbezeichnungen wie oben beschrieben.

Zusätzlich ist es noch sinnvoll, ausgehend vom Wurzelverzeichnis Verzeichnisse einzuführen, welche die zu einem Automatisierungssystem gehörigen Automatisierungsgeräte im Klartext bezeichnen. Das kann z.B. zu Unterverzeichnissen mit der Bezeichnung "S7-300" und einem weiteren Verzeichnis mit der Bezeichnung "S7-400" führen, wenn in dem Automatisierungssystem diese Geräte vorhanden sind. Wenn in einem Automatisierungssystem mehrere Automatisierungsgeräte der gleichen Leistungsklasse vorhanden sind, kommt es bei der Namensgebung der vom Wurzelverzeichnis abzweigenden Verzeichnisse zu Mehrdeutigkeiten. Diese Mehrdeutigkeit wird vermieden, wenn der Bezeichnung eine eindeutige Nummer hinzugefügt wird, so dass sich Bezeichnungen wie "S7-300 [1]", "S7-300 [2]", etc. ergeben. Alternativ wird nicht mehr die Geräteklassenbezeichnung als Verzeichnisname gewählt, sondern die Automatisierungsgeräte werden mit ihren während der Projektierung vergebenen Namen, z.B. "Pressensteuerung", etc. oder - wieder anhand Projektierungsdaten - mit der geographischen Positionen der einzelnen Automatisierungsgeräte bezeichnet, z.B. "Rack 7 Steckplatz 3", oder mit einem geeigneten Ortskennzeichen.

Des Weiteren ist es auch möglich, entweder als Verzeichnisebene oder durch Extension gekennzeichnet, die Daten des Automatisierungsgerätes nach einem entsprechenden Transfervorgang auf Seiten des Automatisierungsgerätes oder auf Seiten des Endgerätes in ein maschinenlesbares Format zu konvertieren, z.B. XML, das dann auf Seiten des Endgerätes interpretiert werden kann und gegebenenfalls über einen zusätzlichen Filter z.B. in ein Standardprogramm, z. B. ein Tabellenkalkulationsprogramm, ein Datenbankprogramm, ein Visualisierungsprogramm, etc., importiert werden kann.

Eine weitere Aufgabe der Erfindung besteht darin, ein zur Durchführung des Verfahrens geeignetes Automatisierungsgerät anzugeben. Diese Aufgabe wird durch ein Automatisierungsgerät gemäß Anspruch 11 gelöst. Die abhängigen Ansprüche sind auf bevorzugte Ausführungsformen der Erfindung gerichtet.

Gemäß der Erfindung ist vorgesehen, dass ein Automatisierungsgerät mit einem Speicher und einer Funktionsschnittstelle, die selbst im Speicher abgelegt und zum Zugriff auf ein im Speicher gespeichertes Objektmodell vorgesehen ist, einen im Speicher abgelegten Umsetzer sowie einen Client und/oder einen Server aufweist. Der Client oder Server leitet einen auf das Objektmodell bezogenen Kommunikationsauftrag, mit dem also schreibend oder lesend auf das Objektmodell zugegriffen wird, an den Umsetzer weiter. Der Umsetzer ist zur Umsetzung des Kommunikationsauftrages in ein durch die Funktionsschnittstelle verarbeitbares Format und zur Weiterleitung des umgesetzten Kommunikationsauftrags an die Funktionsschnittstelle vorgesehen. Außerdem umfasst das Automatisierungsgerät eine Programmiergeräteschnittstelle zum Anschluss eines externen Programmiergeräts, die unter Umgehung des Umsetzers mit der Funktionsschnittstelle verbunden ist.

Wenn z. B. ein Kommunikationsauftrag zum Lesen des Datenbausteins mit der Nummer 1 abgesetzt wird, gelangt dieser Auftrag an den Client oder Server, der in diesem Falle besonders ausgestaltet ist und dem Automatisierungsgerät vorgeschaltet ist. Der Client oder Server erkennt, dass es sich um einen Leseauftrag handelt, der sich auf Daten in dem Automatisierungsgerät, das Objektmodell, bezieht. Der Client oder Server gibt den Auftrag an den Umsetzer weiter, der sowohl den Funktionsumfang des Clients oder Servers als auch den Funktionsumfang der Funktionsschnittstelle kennt. Der Umsetzer konvertiert den Leseauftrag in einen entsprechenden Aufruf zum Lesen von Daten aus dem Objektmodell und den Parameter des Leseauftrags, hier entsprechend z.B. "DB 1", in einen entsprechenden Parameter zur Selektion des ersten Datenbausteins innerhalb des Speichers des Automatisierungsgerätes. Damit ist schließlich ein Funktionsaufruf generiert, der an das Automatisierungsgerät, an dessen Funktionsschnittstelle, übergeben werden kann. Der generierte Funktionsaufruf entspricht einem Funktionsaufruf, wie ihn ein proprietäres Programmiergerät direkt erzeugen kann. Als Reaktion auf den Funktionsaufruf liefert das Automatisierungsgerät, genauer dessen Funktionsschnittstelle, den ersten Datenbaustein zurück. Dieser wird bzw. dessen Daten werden an den Client oder Server übermittelt, der seinerseits diese Daten weiter an das Pendant zu Client oder Server auf Seiten des Endgerätes überträgt, so dass die Daten damit schließlich zum Endgerät, von dem der Datenbaustein angefordert war, gelangen.

Vorteilhaft weist das Automatisierungsgerät sowohl einen Client wie auch einen Server auf und kann damit in einer Kommunikationsbeziehung mit anderen Kommunikationsteilnehmern, z.B. anderen Automatisierungsgeräten oder Endgeräten, sowohl als Datenquelle wie auch als Datensenke dienen.

Weiter vorteilhaft weist das Automatisierungsgerät eine Standardschnittstelle auf, mit welcher der Client oder Server kommunikativ verbunden ist. Client oder Server sind damit zur Abwicklung von über die Standardschnittstelle eingehenden oder abgehenden Kommunikationsaufträgen gemäß einem Standardprotokoll, z.B. FTP oder NFS, geeignet. An die Standardschnittstelle ist als Endgerät z.B. ein so genannter Personalcomputer anschließbar. Wenn das Automatisierungsgerät einen Server umfasst, gehört zu dem Endgerät, mit dem der Zugriff auf das Automatisierungsgerät erfolgt, ein entsprechender Client. Weist dagegen das Automatisierungsgerät einen Client auf, umfasst das Endgerät einen korrespondierenden Server.

Weiter vorteilhaft ist der Umsetzer auch zur Umsetzung eines Kommunikationsauftrages von der Funktionsschnittstelle in ein durch den Client oder den Server verarbeitbares Format und zur Weiterleitung des umgesetzten Kommunikationsauftrags an den Client oder den Server vorgesehen. Dann kann das Automatisierungsgerät auch als aktiver Kommunikationspartner in einer Kommunikationsbeziehung fungieren und z.B. bei Erreichen eines bestimmten Zustands im gesteuerten Prozess entsprechende Daten an das Endgerät senden. Ein Beispiel sind z.B. Produktionsdaten, die während einer Chargenfertigung durch das Automatisierungsgerät protokolliert wurden und die nach Chargenende an eine übergeordnete Station zu Auswertungszwecken übermittelt werden sollen.

Der Client ist vorteilhaft ein FTP-Client und der Server entsprechend ein FTP-Server. Damit wird das File Transfer Protocol (FTP), ein weit verbreitetes Standardprotokoll, zum Zugriff auf das Objektmodell des Automatisierungsgerätes verwendbar.

Alternativ ist der Client vorteilhaft ein NFS-Client und der Server entsprechend ein NFS-Server. Damit wird das NFS-Protokoll (NFS = Network File System), das gleichfalls ein weit verbreitetes Standardprotokoll ist, zum Zugriff auf das Objektmodell des Automatisierungsgerätes verwendbar.

Gemäß einer weiteren Alternative ist der Client vorteilhaft ein NNTP-Client und der Server entsprechend ein NNTP-Server. Damit wird das NNTP-Protokoll (NNTP = Network News Transfer Protocol), das ebenfalls ein weit verbreitetes Standardprotokoll ist, zum Zugriff auf das Objektmodell des Automatisierungsgerätes verwendbar.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: ein Automatisierungsgerät,
- FIG 2: ein Objektmodell eines Automatisierungsgerätes,
- FIG 3: eine Struktur des Objektmodells und
- FIG 4: eine Struktur eines Teils des Objektmodells, der sich auch Meldungen, z.B. Status-, Warn- oder Fehlermeldungen, bezieht.

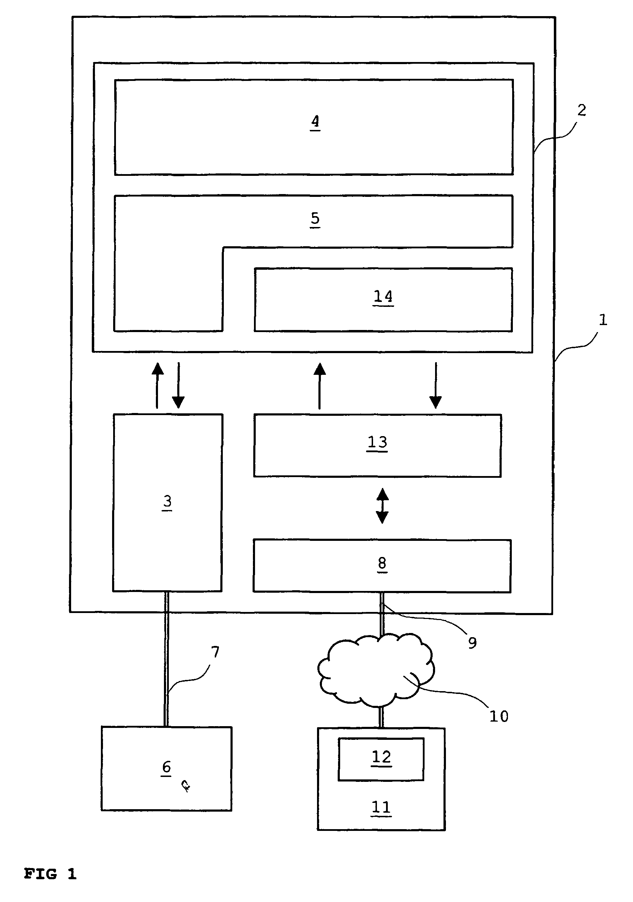

FIG 1 zeigt ein Automatisierungsgerät 1 mit einem Speicher 2 und einer Programmiergeräteschnittstelle 3. Im Speicher 2 ist unter anderem das so genannte Objektmodell 4 und eine Funktionsschnittstelle 5 zum Zugriff auf das Objektmodell 4 gespeichert.

Mit einem externen Programmiergerät 6 wird über die Programmiergeräteschnittstelle 3 und die Funktionsschnittstelle 5 auf das Objektmodell 4 des Automatisierungsgeräts 1 zugegriffen. Die Programmiergeräteschnittstelle 3 ermöglicht den Anschluss einer Kommunikationsverbindung 7 zwischen Programmiergerät 6 und Automatisierungsgerät 1 und dient als Mittler zwischen Programmiergerät 6 und Funktionsschnittstelle 5. Das Programmiergerät 6 umfasst zur Umsetzung von vom Automatisierungsgerät 1 empfangenen Daten ein der Funktionsschnittstelle 5 entsprechendes Pendant (nicht dargestellt).

Wenn durch das Programmiergerät 6 Daten des Objektmodells 4 z.B. gelesen werden sollen, trifft vom Programmiergerät 6 über die Programmiergeräteschnittstelle 3 bei der Funktionsschnittstelle 5 ein entsprechender Auftrag, z.B. "get DB 1" (Datenbaustein 1 lesen), ein. Die Funktionsschnittstelle 5 umfasst Mittel (nicht dargestellt), um diesen Auftrag z.B. derart zu interpretieren, dass ein Zugriff auf den Bereich des Objektmodells 4, der im Speicher 2 den Datenbaustein mit der Nummer 1 repräsentiert, erfolgen kann. Der entsprechende Speicherbereich wird durch die Funktionsschnittstelle 5 zum Übertragen über die Programmiergeräteschnittstelle 3 an das Programmiergerät 6 bereitgestellt und zu einem geeigneten Zeitpunkt an das Programmiergerät 6 übertragen.

Entsprechendes geschieht beim Laden z.B. eines Funktionsbausteins aus dem Programmiergerät 6 in das Objektmodell 4 des Automatisierungsgerätes, z.B. "put FB 10" (Funktionsbaustein 10 schreiben). Die Funktionsschnittstelle 5 ermöglicht den Zugriff auf den Bereich des Objektmodells 4, der im Speicher 2 den jeweiligen Funktionsbaustein repräsentiert. In diesen Speicherbereich werden die vom Programmiergerät 6 empfangenen Daten eingeschrieben.

Ein Automatisierungsgerät 1 mit Speicher 2, Objektmodell 4, Funktionsschnittstelle 5 sowie Programmiergeräteschnittstelle 3 ist bekannt.

Daneben umfasst das Automatisierungsgerät 1 noch eine Standardschnittstelle 8, mittels derer über eine entsprechende Kommunikationsverbindung 9, ggf. unter Zwischenschaltung von Kommunikationsverbindungen über das so genannte Internet 10, als beliebiges Endgerät 11 z.B. ein Standardcomputer 11, wie er heute üblicherweise für Büroanwendungen Verwendung findet, anschließbar ist.

Das so genannte Protokoll, das zur Kommunikation zwischen Automatisierungsgerät 1 und Programmiergerät 6 verwendet wird, ist üblicherweise ein proprietäres Protokoll, das häufig vom Hersteller des jeweiligen Automatisierungsgerätes 1 für dieses spezifisch vorgegeben wird. Dabei ergibt sich die Proprietät im Wesentlichen durch die spezifische Funktionalität der Funktionsschnittstelle 5, die Mittel umfasst, um Aufträge wie "get DB 1" oder "put FB 10" direkt in Zugriffe auf das Objektmodell 4 umzusetzen.

Um einen Datenaustausch zwischen dem Automatisierungsgerät 1 und einem Standard Endgerät 11 zu ermöglichen, wird nicht das proprietäre Protokoll verwendet, das zur Kommunikation zwischen Automatisierungsgerät 1 und Programmiergerät 6 genutzt wird. Statt dessen werden allgemein gebräuchliche Protokolle, wie z.B. FTP oder NFS, verwendet. Software zur Abwicklung von Datentransfers gemäß FTP oder NFS auf dem Endgerät 11 ist in vielfältiger Form verfügbar, so dass der Nutzer des Endgerätes 11 eine Auswahl aus dem bestehenden Angebot entsprechend der jeweiligen Erfordernisse oder Randbedingungen (Betriebssystem, Speicherplatz) treffen kann.

Mit dem Ausführen einer Software zur Abwicklung von Datentransfers gemäß FTP oder NFS wird auf dem Endgerät 11 entweder ein so genannter Server 12 oder ein so genannter Client 12 oder auch ein Server 12 und ein Client 12 eingerichtet.

Zur Kommunikation mit dem Client 12 und/oder dem Server 12 des Endgerätes 11 ist auf Seiten des Automatisierungsgerätes eine komplementäre Funktionalität 13 vorgesehen. Die Beschreibung wird fortgesetzt, für den Fall, dass auf Seiten des Endgerätes 11 ein Client 12 und entsprechend auf Seiten des Automatisierungsgerätes ein Server 13 zur Abwicklung des jeweils gewählten Standardprotokolls vorhanden ist.

Kommunikationsaufträge gemäß dem Standardprotokoll, z.B. "get DB 1" zum Transfer des Datenbausteins mit der Nummer 1 aus dem Objektmodell 4 des Automatisierungsgerätes 1 in das Endgerät oder "put FB 10" zum Transfer eines Funktionsbausteins aus dem Endgerät 11 in das Objektmodell 4 an die Stelle, die im Speicher 2 den Funktionsbaustein mit der Nummer 10 repräsentiert, gelangen vom Client 12 zum Server 13. Der Server 13 reicht den Kommunikationsauftrag an einen Umsetzer 14 weiter, der den Kommunikationsauftrag gemäß dem Standardprotokoll in einen Kommunikationsauftrag, der von der Funktionsschnittstelle 5 des Automatisierungsgerätes 1 abgewickelt werden kann, konvertiert. Mittels der Funktionsschnittstelle 5 erfolgt der Zugriff auf das Objektmodell 4 des Automatisierungsgerätes und damit der je nach ursprünglichem Kommunikationsauftrag lesende oder schreibende Zugriff auf den Speicher 2.

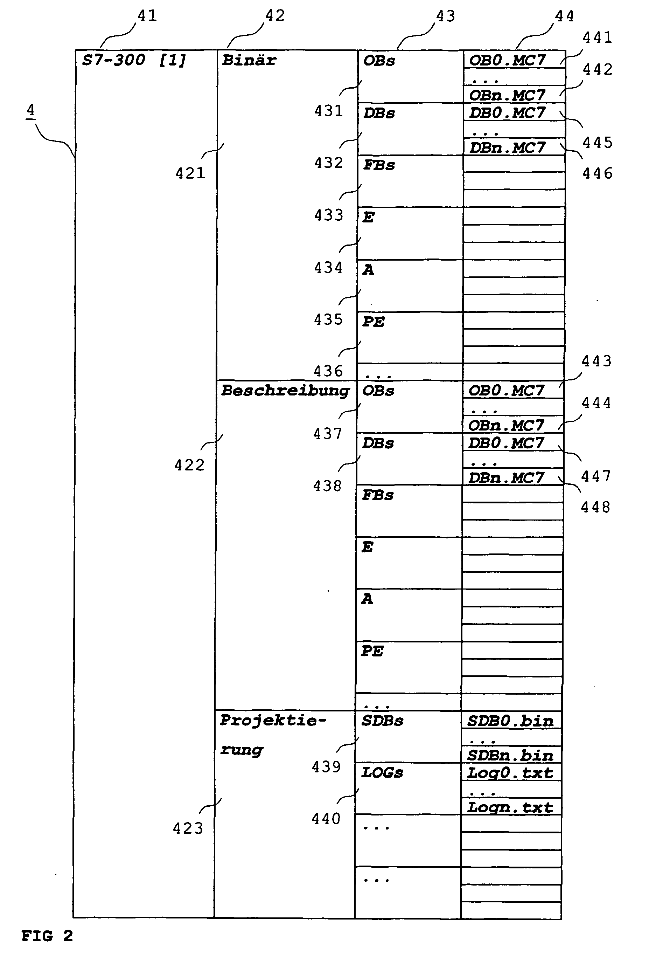

FIG 2 zeigt eine schematische, hierarchische Darstellung eines Objektmodells 4 eines Automatisierungsgerätes 1. Die Spalten 41, 42, 43, 44 repräsentieren Hierarchiestufen innerhalb des Objektmodells 4. Eine oberste Hierarchiestufe 41 umfasst das komplette Objektmodell 4 eines bestimmten Automatisierungsgerätes 1, hier mit "S7-300" bezeichnet. In einer darunter liegenden Hierarchiestufe 42, ist das Objektmodell in Binärdaten 421, Beschreibungsdaten 422 und Projektierungsdaten 423 unterteilt. In einer nächst niedrigeren Hierarchiestufe 43 sind z.B. die Binärdaten 421 in Organisationsbausteine (OBs) im Binärformat 431, Datenbausteine (DBs) im Binärformat 432, Funktionsbausteine (FBs) im Binärformat 433, Eingänge (E) im Binärformat 434, Ausgänge (A) im Binärformat 435, und Prozessabbild der Eingänge (PE) im Binärformat 436 usw. unterteilt. Entsprechend sind die Beschreibungsdaten 422 in Organisationsbausteine (OBs) mit Beschreibung 437, Datenbausteine (DBs) mit Beschreibung 438 usw. unterteilt. Schließlich sind die Projektierungsdaten 423 in Systemdatenbausteine (SDBs) 439, Protokolldatei (LOGs) 440 usw. unterteilt. Die Gesamtheit z.B. der Organisationsbausteine 431, 437 umfasst in einer letzten Hierarchiestufe 44 schließlich die einzelnen Organisationsbausteine (OB0 .. OBn) 441, 442, 443, 444 selbst. Entsprechend umfasst die Gesamtheit der Datenbausteine 432, 438 in dieser letzten Hierarchiestufe 44 auf die einzelnen Datenbausteine (DB0 .. DBn) 445, 446, 447, 448.

Mit dieser hierarchischen Strukturierung des Objektmodells 4 ist es möglich - wie mittels bekannter Dateimanager heute gebräuchlicher Betriebssysteme - nicht nur auf einzelne Organisations- 441-444 oder Datenbausteine 445-448, sondern auf die Gesamtheit z.B. aller Organisations- 431, 437 oder Datenbausteine 432, 438 zuzugreifen. Entsprechend lässt sich mit einem einzigen Zugriff der komplette Datenbestand des Objektmodells 4 im Binärformat 421 oder zusammen mit erläuternder Beschreibung 422 transferieren. Schließlich ist sogar das Objektmodell 4 selbst selektierbar, so dass auch ein Transfer des kompletten Objektmodells mit einem einzigen Zugriff erfolgen kann.

Dies ist möglich, weil die einzelnen Elemente 441 bis 448 des Objektmodells 4 wie auch deren gruppenweise Kombination 431 bis 438 für in der gleichen Weise handhabbar sind, wie dies bei den genannten Dateimanagern für so genannte Verzeichnisse (auch als "Directory" oder "Folder" bezeichnet) und Dateien gilt. Durch den Umsetzer 14 wird dem Server 13 das Objektmodell 4 und dessen Struktur in der oben beschriebenen hierarchischen Form präsentiert.

Die bisher bei Automatisierungsgeräten übliche "eindimensionale Struktur" des Objektmodells wird damit durchbrochen, indem gleichartige Komponenten gruppenweise zusammengefasst werden und gruppenweise transferierbar sind.

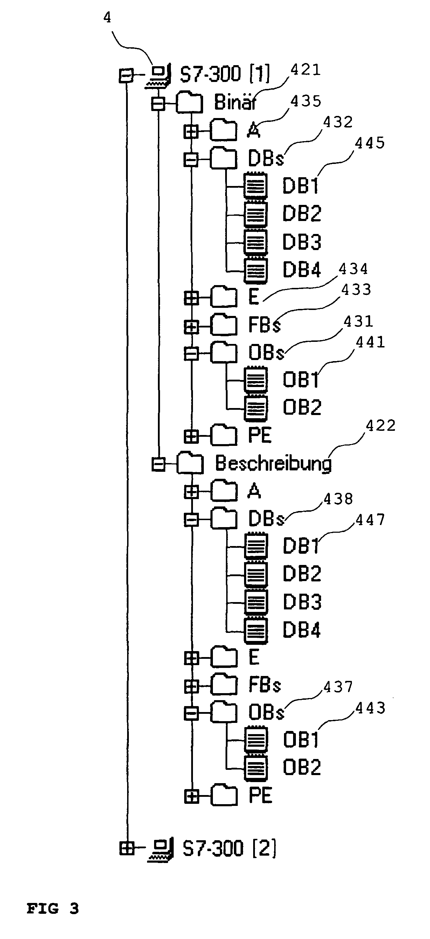

FIG 3 zeigt dazu eine Darstellung des Objektmodells 4 in einer Form, wie sie der Präsentation einer Verzeichnisstruktur durch heute gebräuchliche Dateimanager entspricht. Die Bezugszeichen entsprechen den in FIG 2 verwendeten Bezugszeichen. Dem Bediener des Endgerätes 11 kann mittels der Kommunikations- und Transferbefehle des gewählten Standardprotokolls zunächst die Struktur des Objektmodells 4 ("Directory", "dir") des jeweiligen Automatisierungsgerätes 1 angezeigt werden. Am Bildschirm des Endgerätes 11 wird damit die Struktur des Objektmodells 4 graphisch in der in FIG 3 exemplarisch gezeigten Weise dargestellt. In dieser graphischen Darstellung kann der Benutzer des Endgerätes 11 einzelne Komponenten, wie etwa sämtliche Datenbausteine im Binärformat 432 oder den Organisationsbaustein mit der Nummer 1 inklusive Beschreibung 443 zum Transfer auswählen.

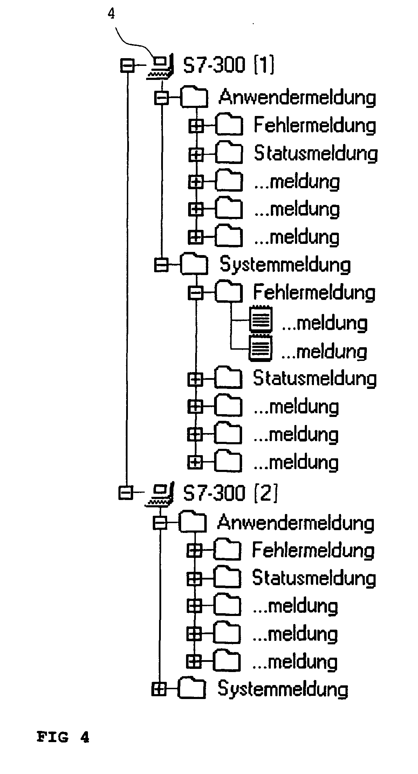

In analoger Weise werden auch Meldungen, wie z.B. Status- oder Fehlermeldungen etc., des Automatisierungsgerätes 1 komfortabel dem Anwender präsentiert. Dazu sind sämtliche Meldungen gleicher Art, z.B. Fehlermeldungen, in einer entsprechenden Gruppe zusammengefasst. Mehrere Gruppen, z.B. die Gruppe sämtlicher Fehlermeldungen, die Gruppe sämtlicher Statusmeldungen, etc., sind, soweit sie sich z.B. auf das Automatisierungsgerät 1 selbst beziehen, in einer eigenen Gruppe "Systemmeldung" und soweit sie sich z.B. auf das durch das Automatisierungsgerät 1 ausgeführte Anwenderprogramm beziehen in einer weiteren eigenen Gruppe "Anwendermeldung" zusammengefasst. Am Bildschirm des Endgerätes wird diese Struktur graphisch in einer in FIG 4 exemplarisch gezeigten Weise dargestellt.

Der Anwender kann auf Seiten des Endgerätes 11 entlang der sich damit ergebenden hierarchischen Struktur schnell zu der gewünschten Art und Kategorie von Meldung gelangen und/oder einzelne Meldungen oder Gruppen von Meldungen zum Transfer, etwa für Dokumentationszwecke, auswählen.

Damit lässt sich die Erfindung kurz wie folgt darstellen:

Es wird ein Verfahren zum Zugriff auf die Daten eines Automatisierungsgerätes 1 und ein zu dessen Ausführung geeignetes Automatisierungsgerät 1 angegeben, bei dem ein Zugriff auf die Daten über ein entferntes Endgerät 11 gemäß einem Standardprotokoll erfolgt, wobei das Automatisierungsgerät 1 einen Client 13 und/oder Server 13 zur Abwicklung von Kommunikationsaufträgen gemäß dem Standardprotokoll und einen Umsetzer 14 zur Konvertierung eines Kommunikationsauftrages in ein durch eine Funktionsschnittstelle 5, eine interne Funktionalität des Automatisierungsgerätes zum 1 direkten Zugriff auf dessen Daten, verarbeitbares Format aufweist.

## Patentansprüche

1. Verfahren zum Zugriff auf Daten eines Automatisierungsgerätes (1), das einen Speicher (2), eine Programmiergeräteschnittstelle (3) zum Anschluss eines externen Programmiergeräts (6), eine Standardschnittstelle (8), einen mit der Standardschnittstelle (8) kommunikativ verbundenen Client (13) oder Server (13) und eine Funktionsschnittstelle (5) aufweist, wobei die Funktionsschnittstelle (5) selbst im Speicher (2) abgelegt ist und zum Ermöglichen eines Zugriffs auf ein im Speicher (2) gespeichertes Objektmodell (4) vorgesehen ist,
**dadurch gekennzeichnet, dass** ein auf das Objektmodell (4) bezogener Kommunikationsauftrag, mit dem schreibend auf das Objektmodell (4) zugegriffen wird, vom Client (13) oder Server (13) an einen im Speicher (2) abgelegten Umsetzer (14) weitergeleitet wird, der den Kommunikationsauftrag in ein durch die Funktionsschnittstelle (5) verarbeitbares Format umsetzt, und ein auf das Objektmodell (4) bezogener Kommunikationsauftrag vom externen Programmiergerät über die Programmiergeräteschnittstelle (3) unter Umgehung des Umsetzers (14) an die Funktionsschnittstelle (5) geleitet wird.

2. Verfahren nach Anspruch 1, wobei der Umsetzer (14) auch einen Kommunikationsauftrag von der Funktionsschnittstelle (5) in ein durch den Client (13) oder den Server (13) verarbeitbares Format umsetzt und den umgesetzten Kommunikationsauftrag an den Client (13) oder den Server (13) weiterleitet.

3. Verfahren nach Anspruch 1 oder 2, wobei der Client (13) oder Server (13) über die Standardschnittstelle (8) eingehende oder abgehende Kommunikationsaufträge gemäß einem Standardprotokoll verarbeitet.

4. Verfahren nach Anspruch 1, 2 oder 3, wobei durch den Umsetzer (14) dem Client (13) oder Server (13) das Objektmodell (4) und dessen Struktur in einer hierarchischen Form präsentiert wird.

5. Verfahren nach einem der Ansprüche 1 bis 4, wobei
- zunächst eine Struktur des Objektmodells (4) als dessen Abbild abgerufen wird, welche die einzelnen Komponenten (441 bis 448) des Objektmodells (4) umfasst und
- danach anhand des Abbilds der Struktur des Objektmodells (4) einzelne oder mehrere Komponenten (441 bis 448) selektiert werden und auf diese zugegriffen wird, indem Daten, die im Speicher (2) der selektierten Komponente (441 bis 448) entsprechen, über die Funktionsschnittstelle (5) geschrieben oder gelesen werden.

6. Verfahren nach Anspruch 5, wobei gleichartige Komponenten des Objektmodells (4) gruppenweise zusammengefasst werden und gruppenweise transferierbar sind.

7. Verfahren nach Anspruch 6, wobei die Struktur des Objektmodells (4) als so genannter Baum mit einer so genannten Wurzel (4), mit mindestens einem so genannten Ast (z. B. 421, 431) und mindestens einem so genannten Blatt (z. B. 441,447) dargestellt wird und jedes Blatt (z. B. 441,447) einer Komponente (441 bis 448) des Objektmodells (4) und jeder Ast (z.B. 431; 421) einer gruppenweisen Zusammenfassung gleichartiger Komponenten (z. B. 441,442) oder anderer Äste (z.B. 431 bis 436) entspricht (wobei eine Komponente entweder ein xx-Baustein oder eine Zusammenfassung gleichartiger Komponenten ist).

8. Verfahren nach einem der Ansprüche 1 bis 7, wobei der Client (13) ein FTP-Client (13) und/oder der Server (13) ein FTP-Server (13) ist.

9. Verfahren nach einem der Ansprüche 1 bis 7, wobei der Client (13) ein NFS-Client (13) und/oder der Server (13) ein NFS-Server (13) ist.

10. Verfahren nach einem der Ansprüche 1 bis 7, wobei der Client (13) ein NNTP-Client (13) und/oder der Server (13) ein NNTP-Server (13) ist.

11. Automatisierungsgerät mit einem Speicher (2), einer Programmiergeräteschnittstelle (3) zum Anschluss eines externen Programmiergeräts (6) und einer Funktionsschnittstelle (5), wobei die Funktionsschnittstelle (5) selbst im Speicher (2) abgelegt ist und zum Ermöglichen eines Zugriffs auf ein im Speicher (2) gespeichertes Objektmodell (4) vorgesehen ist, **gekennzeichnet durch** einen im Speicher (2) abgelegten Umsetzer (14) sowie einen Client (13) und/oder einen Server (13),
- wobei der Client (13) oder Server (13) einen auf das Objektmodell (4) bezogenen Kommunikationsauftrag, mit dem schreibend auf das Objektmodell (4) zugegriffen wird, an den Umsetzer (14) weiterleitet und
- wobei der Umsetzer (14) zur Umsetzung des Kommunikationsauftrages in ein **durch** die Funktionsschnittstelle (5) verarbeitbares Format und zur Weiterleitung des umgesetzten Kommunikationsauftrags an die Funktionsschnittstelle (5) vorgesehen ist,
wobei die Programmiergeräteschnittstelle (3) unter Umgehung des Umsetzers (14) mit der Funktionsschnittstelle (5) verbunden ist.

12. Automatisierungsgerät nach Anspruch 11 mit einer Standardschnittstelle (8), wobei der Client (13) oder Server (13) kommunikativ mit der Standardschnittstelle (8) verbunden und zur Verarbeitung von über die Standardschnittstelle (8) eingehenden oder abgehenden Kommunikationsaufträgen gemäß einem Standardprotokoll vorgesehen ist.

13. Automatisierungsgerät nach Anspruch 11 oder 12, wobei der Umsetzer (14) auch zur Umsetzung eines Kommunikationsauftrages von der Funktionsschnittstelle (5) in ein durch den Client (13) oder den Server (13) verarbeitbares Format und zur Weiterleitung des umgesetzten Kommunikationsauftrags an den Client (13) oder den Server (13) vorgesehen ist.

14. Automatisierungsgerät nach einem der Ansprüche 11 bis 13, wobei der Client (13) ein FTP-Client (13) und/oder der Server (13) ein FTP-Server (13) ist.

15. Automatisierungsgerät nach einem der Ansprüche 11 bis 14, wobei der Client (13) ein NFS-Client (13) und/oder der Server (13) ein NFS-Server (13) ist.

16. Automatisierungsgerät nach einem der Ansprüche 11 bis 15, wobei der Client (13) ein NNTP-Client (13) und/oder der Server (13) ein NNTP-Server (13) ist.

## Claims

1. Method for accessing data of an automation device (1) which has a memory (2), a programming device interface (3) for connecting an external programming device (6), a standard interface (8), a client (13) or server (13), which is communicatively connected to the standard interface (8), and a function interface (5), wherein the function interface (5) is itself held in the memory (2) and is used for allowing access to an object model (4) which is stored in the memory (2), **characterised in that** a communication request relating to the object model (4), which is used for write access to the object model(4), is forwarded from the client (13) or server (13) to a converter (14) held in the memory (2), which converts the communication request into a format which can be processed by the function interface (5) and a communication request relating to the object model (4) is forwarded from the external programming device to the function interface (5) via the programming device interface (3), bypassing the converter (14).

2. Method according to claim 1, wherein the converter (14) also converts a communication request from the function interface (5) into a format which can be processed by the client (13) or the server (13) and forwards the converted communication request to the client (13) or the server (13).

3. Method according to claim 1 or 2, wherein the client (13) or server (13) processes communication requests which are received or sent via the standard interface (8) in accordance with a standard protocol.

4. Method according to claim 1, 2 or 3, wherein the object model (4) and its structure are presented to the client (13) or server (13) in a hierarchical format by the converter (14).

5. Method according to one of the claims 1 to 4, wherein
- a structure of the object model (4) is initially called up in the form of its image, said structure comprising the individual components (441 to 448) of the object model (4), and
- with reference to the image of the structure of the object model (4), individual components or sets of components (441 to 448) are then selected and accessed, i.e. data which corresponds in the memory (2) to the selected components (441 to 448) is written or read via the function interface (5).

6. Method according to claim 5, wherein similar components of the object model (4) are combined in groups and are transferable in groups.

7. Method according to claim 6, wherein the structure of the object model (4) is represented as a so-called tree having a so-called root (4) and at least one so-called branch (e.g. 421, 431) and at least one so-called leaf (e.g. 441, 447), where each leaf (e.g. 441, 447) corresponds to a component (441 to 448) of the object model (4) and each branch (e.g. 431, 421) corresponds to a grouped combination of similar components (e.g. 441, 442) or other branches (e.g. 431 to 436) (wherein a component is either an xx module or a combination of similar components).

8. Method according to one of the claims 1 to 7, wherein the client (13) is an FTP client (13) and/or the server (13) is an FTP server (13).

9. Method according to one of the claims 1 to 7, wherein the client (13) is an NFS client (13) and/or the server (13) is an NFS server (13).

10. Method according to one of the claims 1 to 7, wherein the client (13) is an NNTP client (13) and/or the server (13) is an NNTP server (13).

11. Automation device having a memory (2), a programming device interface (3) for connecting an external programming device (6) and a function interface (5), wherein the function interface (5) is itself held in the memory (2) and is used for allowing access to an object model (4) which is stored in the memory (2),
**characterised by** a converter (14) held in the memory (2) and a client (13) and/or a server (13),
- wherein the client (13) or server (13) forwards a communication request relating to the object model (4), which is used for write access to the object model (4), to the converter (14), and
- wherein the converter (14) is used for converting the communication request into a format which can be processed by the function interface (5), and for forwarding the converted communication request to the function interface (5).

12. Automation device according to claim 11, having a standard interface (8), wherein the client (13) or server (13) is communicatively connected to the standard interface (8), and is used for processing communication requests which are received or sent via the standard interface (8) in accordance with a standard protocol.

13. Automation device according to claim 11 or 12, wherein the converter (14) is also used for converting a communication request from the function interface (5) into a format which can be processed by the client (13) or the server (13), and for forwarding the converted communication request to the client (13) or the server (13).

14. Automation device according to one of the claims 11 to 13, wherein the client (13) is an FTP client (13) and/or the server (13) is an FTP server (13).

15. Automation device according to one of the claims 11 to 14, wherein the client (13) is an NFS client (13) and/or the server (13) is an NFS server (13).

16. Automation device according to one of the claims 11 to 15, wherein the client (13) is an NNTP client (13) and/or the server (13) is an NNTP server (13).

## Revendications

1. Procédé d'accès à des données d'un appareil d'automatisation (1) qui comporte une mémoire (2), une interface d'appareil de programmation (3) permettant le raccordement d'un appareil de programmation externe (6), une interface standard (8), un client (13) ou un serveur (13) qui sont reliés de façon à pouvoir communiquer avec l'interface standard (8) et une interface fonctionnelle (5), l'interface fonctionnelle (5) étant elle-même stockée dans la mémoire (2) et étant prévue pour permettre un accès à un modèle d'objet (4) mémorisé dans la mémoire (2),
**caractérisé en ce qu'**une tache de communication, liée au modèle d'objet (4 et permettant d'accéder en écriture au modèle d'objet (4), est transférée du client (13) ou du serveur (13) à un convertisseur (14) qui est stocké dans la mémoire (2) et qui convertit la tâche de communication en un format pouvant être traité par l'interface fonctionnelles (5), et une tâche de communication, liée au modèle d'objet (4), est dirigée de l'appareil de programmation externe vers l'interface fonctionnelle (5) par l'intermédiaire de l'interface d'appareil de programmation (3) en contournant par le convertisseur (14).

2. Procédé selon la revendication 1, dans lequel le convertisseur (14) convertit également une tâche de communication provenant de l'interface fonctionnelle (5) en un format pouvant être traité par le client (13) ou le serveur (13) et transfère la tâche de communication convertie au client (13) ou au serveur (13).

3. Procédé selon la revendication 1 ou 2, dans lequel le client (13) ou le serveur (13) traite des tâches de communication, entrant ou sortant par le biais de l'interface standards (8), conformément un protocole standard.

4. Procédé selon la revendication 1, 2 ou 3, dans lequel le modèle d'objet (4) et sa structure sont présentés par le convertisseur (14) sous une forme hiérarchisée au client (13) ou au serveur (13).

5. Procédé selon l'une des revendications 1 à 4, dans lequel
- une structure du modèle d'objet (4) est tout d'abord recherchée en tant que représentation de celui-ci, laquelle structure comporte les composants individuels (441 à 448) du modèle d'objet (4) puis
- des composants individuels ou plusieurs composants (441 à 448) sont sélectionnés en se référant à la représentation de la structure du modèle d'objet (4) et on accède à ceux-ci en écrivant ou lisant, par le biais de l'interface fonctionnelle (5), des données qui correspondent dans la mémoire (2) aux composants sélectionnés (441 à 448).

6. Procédé selon la revendication 5, dans lequel des composants de même type du modèle d'objet (4) sont rassemblés en groupe et sont transférables par groupe.

7. Procédé selon la revendication 6, dans lequel la structure du modèle d'objet (4) est représentée sous la forme dite d'un arbre comportant une dite racine (4), au moins une dite branche (par exemple 421, 431) et au moins une dite feuille (par exemple 441, 447) et chaque feuille (par exemple 441, 447) d'un composant (441 à 448) du modèle d'objet (4) et chaque branche (par exemple 431 ; 421) correspondent à un rassemblement par groupe de composants de même type (par exemple 441, 442) ou d'autres branches (par exemple 431 à 436) (un composant étant un module xx ou un rassemblement de composants de même type).

8. Procédé selon l'une des revendications 1 à 7, dans lequel le client (13) est un client FTP (13) et/ou le serveur (13) est un serveur FTP (13).

9. Procédé selon l'une des revendications 1 à 7, dans lequel le client (13) est un client NFS (13) et/ou le serveur (13) est un serveur NFS (13).

10. Procédé selon l'une des revendications 1 à 7, dans lequel le client (13) est un client NNTP (13) et/ou le serveur (13) est un serveur NNTP (13).

11. Appareil d'automatisation comportant une mémoire (2), une interface d'appareil de programmation (3) permettant le raccordement d'un appareil de programmation externe (6) et une interface fonctionnelle (5), l'interface fonctionnelle (5) étant stockée elle-même dans la mémoire (2) et étant prévue pour permettre un accès à un modèle d'objet (4) mémorisé dans la mémoire (2),
**caractérisé par** un convertisseur (14) stocké dans la mémoire (2) ainsi que par un client (13) et/ou un serveur (13),
- le client (13) ou le serveur (13) transmettant une tâche de communication, liée au modèle d'objet (4) et permettant l'accès en écriture au modèle d'objet (4), au convertisseur (14) et
- le convertisseur (14) étant prévue pour convertir la tâche de communication en un format pouvant être traité par l'interface fonctionnelle (5) et pour transmettre la tâche de communication convertie à l'interface fonctionnelle (5),
l'interface d'appareil de programmation (3) étant reliée à l'interface fonctionnelle (5) en contournant par le convertisseur (14).

12. Appareil d'automatisation selon la revendication 11 comportant une interface standard (8), dans lequel le client (13) ou le serveur (13) est relié de façon à pouvoir communiquer avec l'interface standard (8) et est prévu pour traiter des tâches de communication, entrant ou sortant par le biais de l'interface standard (8), selon un protocole standard.

13. Appareil d'automatisation selon la revendication 11 ou 12, dans lequel le convertisseur (14) est également prévu pour convertir une tâche de communication provenant de l'interface fonctionnelle (5) dans un format pouvant être traité par le client (13) ou le serveur (13) et pour transmettre la tâche de communication convertie au client (13) ou au serveur (13).

14. Appareil d'automatisation selon l'une des revendications 11 à 13, dans lequel le client (13) est un client FTP (13) et/ou le serveur (13) est un serveur FTP (13).

15. Appareil d'automatisation selon l'une des revendications 11 à 14, dans lequel le client (13) est un client NFS (13) et/ou le serveur (13) est un serveur NFS (13).

16. Appareil d'automatisation selon l'une des revendications 11 à 15, dans lequel le client (13) est un client NNTP (13) et/ou le serveur (13) est un serveur NNTP (13).
